# EUROPEAN PATENT APPLICATION

(11) **EP 2 160 964 A1**
(43) Date of publication of application: **10.03.2010**
(21) Application number: 09166797.2
(22) Date of filing: 30.07.2009
(51) Int. Cl.: A47J 19/02, B30B 9/22

(54) **Domestic appliance**

(30) Priority: 03.09.2008 GB 0815990
(71) Applicant: Dyson Technology Limited, Malmesbury, Wiltshire SN16 0RP (GB)
(72) Inventor: Vanderstegen-Drake, Mark, Malmesbury, Wiltshire SN16 0RP (GB)
(74) Representative: Booth, Andrew Steven

(57) **Abstract**

There is provided apparatus (10) for extracting juice from a comestible (450), the apparatus (10) comprising a cavity (134) for receiving a comestible (450), the cavity (134) having a cavity wall (122) extending about an axis (X-X) and movable in response to an applied hydraulic force to form a plurality of lobes (460) spaced about the axis (X-X) for applying a compressive force to the comestible (450). By providing such an arrangement, the applied force can be distributed evenly across the comestible (450), resulting in an even collapse of the comestible (450).

## Description

The invention relates to apparatus for extracting juice from a comestible.

There are a wide variety of known techniques for extracting juice from a comestible in a domestic environment. A conventional technique for domestic juice extraction from citrus fruit is to first cut the fruit in half, and then press and rotate the cut halves of the fruit against a lobed cone to extract the juice.

Another technique is centrifugal juice extraction. This technique involves introducing peeled, chopped and grated comestible into a rotatable basket. The basket is then rotated at high speed in the manner of a centrifuge. Apertures provided in the basket enable juice to be extracted therethrough, whilst the pulp remains behind in the basket.

A disadvantage of each of these types of juice extractor is that the comestible must be prepared by a user before the juice can be extracted. This makes the preparation of juice more time-consuming. Further, cleaning of such juicing appliances is often laborious.

An alternative known technique for juicing in a domestic environment is hydraulic juicing. Examples of juicers using this principle of operation are shown and described in US 2,414,053 and GB 2158697. These juicers each comprise a chamber having a flexible wall attached thereto. The flexible wall splits the chamber into a comestible-receiving cavity and a fluid cavity. Comestibles such as fruit or vegetables are placed into the comestible-receiving cavity and a fluid (for example, water or compressed air) is pumped into the fluid cavity. The hydraulic pressure from the fluid crushes the comestible in the comestible-receiving cavity, releasing the juice contained within the comestible. The juice is then extracted through an outlet pipe into a suitable receptacle provided by a user.

A hydraulic juicing technique is advantageous in that whole fruit and vegetables can be juiced with little or no prior preparation. However, in the arrangements shown and described in US 2,414,053 and GB 2158697, the hydraulic pressure from the fluid acts on the comestible in an uncontrolled manner.

If fruit is being juiced, the uncontrolled pressure can cause the fruit to collapse unevenly or only partially. This is because fruit such as oranges are not homogeneous structures and may have weak regions where collapse will occur under a smaller applied force than at other regions. Due to the nature of a hydraulic system, the weakest points in the fruit will be caused to collapse first, leading to an uneven collapse of the fruit as a whole. Partial collapse of a fruit will reduce the yield of juice obtained. Further, uncontrolled and uneven collapse may potentially split the skin of the fruit, releasing unwanted zest and peel oil into the extracted juice. This will give the juice a bitter aftertaste.

In a first aspect, the present invention provides apparatus for extracting juice from a comestible, the apparatus comprising a cavity for receiving a comestible, the cavity having a cavity wall extending about an axis and movable in response to an applied hydraulic force to form a plurality of lobes spaced about the axis for applying a compressive force to the comestible.

By forming a plurality of lobes spaced about the axis for applying a compressive force to the comestible, the applied force can be distributed evenly across the comestible, resulting in an even collapse of the comestible. The expansion of each movable part of the cavity wall relative to the other movable parts and allows a controlled movement of the cavity wall.

Preferably, the lobes formed by the cavity wall are evenly spaced about the axis. This arrangement provides the most controlled compression of the comestible in the cavity, because the hydraulic force is evenly applied around the wall.

Preferably, the cavity wall is arranged to form at least three expandable lobes. More preferably, the cavity wall is arranged to form at least five expandable lobes. Increasing the number of lobes can enable the collapse of the comestible to be closely controlled.

Preferably, the cavity wall comprises restraining members located thereabout, each of the plurality of lobes being formed between adjacent restraining members. By restraining, or holding the cavity wall at a plurality of restraining locations, each movable part of the cavity wall is tethered, for example to the chamber wall extending about the cavity, at two spaced locations. This controls the expansion of each movable part of the cavity wall relative to the other movable parts in response to the applied hydraulic force and allows a controlled movement of the cavity wall. This is because the tethering prevents one part of the cavity wall from expanding significantly more than the other parts, which would lead to an uncontrolled collapse. Consequently, the applied force can be distributed evenly across the comestible, resulting in an even collapse of the comestible.

In a second aspect, the present invention provides apparatus for extracting juice from a comestible, the apparatus comprising a cavity for receiving a comestible, the cavity comprising a cavity wall extending about an axis, wherein the cavity wall is restrained at a plurality of restraining locations spaced about the axis, parts of the cavity wall between the restraining locations being movable in response to an applied hydraulic force so as to apply a compressive force to the comestible. A restraining member is preferably provided at each of the restraining locations.

It is preferable that each of the restraining members comprises a rib which is preferably elongate and extends parallel to the axis of the cavity. Preferably, an outer wall is provided adjacent the cavity wall, the restraining members extending between the cavity wall and the outer wall. The restraining members may be integral with the outer wall and the cavity wall, or otherwise connected to each of these walls.

The cavity wall and the outer wall are preferably connected together. Preferably, the cavity wall is folded to form the outer wall. This allows the cavity wall and outer wall to be formed in one piece, for example using a vacuum moulding technique.

A liner is preferably removably locatable within the cavity for lining the cavity wall. By providing a removable liner, the inner surface of the cavity wall can be kept clean and requires less maintenance. Further, a removable liner can easily be removed for washing by hand or in a dishwasher. Therefore, in a third aspect the present invention provides apparatus for extracting juice from a comestible, the apparatus comprising a cavity for receiving a comestible, the cavity having a cavity wall movable in response to an applied hydraulic force so as to apply a compressive force to the comestible, and

Preferably, the liner forms a pocket for receiving the comestible. By providing a pocket for the comestible, the comestible can potentially be entirely enclosed within the liner.

Preferably, the liner has a reinforced open upper end. This allows the liner to be grasped by a user and also helps to keep the shape of the liner. Preferably, the liner comprises a liner wall which is shaped substantially to conform to the cavity wall.

It is preferred that the liner wall has a base portion having at least a portion of greater rigidity than the remainder of the liner. Preferably, the base portion comprises a plate over-moulded into the liner wall. More preferably, the plate is formed from material having a greater stiffness than the material from which the liner wall is formed. This provides a seat for a comestible located within the cavity.

Preferably, the liner wall is formed from a flexible material, preferably polyurethane. The liner is preferably formed from a washable material.

Preferably, the apparatus comprises a fluid cavity for containing fluid for applying the hydraulic force to the cavity wall, at least a part of the fluid cavity being defined by the cavity wall. Preferably, the apparatus comprises a chamber having a chamber wall extending about the cavity wall, the chamber wall and the cavity wall delimiting the fluid cavity. The outer wall is preferably attached to the chamber wall. At least a part of the fluid cavity is preferably formed between the cavity wall and the outer wall.

The apparatus preferably comprises a hydraulic circuit for applying a hydraulic pressure to the cavity wall. The hydraulic circuit is preferably arranged to move at least a part of the cavity wall away from the outer wall to apply a compressive force to a comestible located within the cavity, and to urge the outer wall towards the chamber wall. By arranging the hydraulic circuit to both move at least a part of the cavity wall away from the outer wall to apply a compressive force to a comestible located within the cavity, and to urge the outer wall towards the chamber wall, a compressive force can be applied to the comestible whilst simultaneously causing the outer wall to seal against the chamber wall, thereby reducing the risk of leakage of hydraulic fluid from between the outer wall and the chamber wall. Therefore, in a fourth aspect the present invention provides apparatus for extracting juice from a comestible, the apparatus comprising a chamber comprising a chamber wall, a movable member located at least partly within the chamber, the movable member comprising a cavity wall delimiting a cavity for receiving a comestible and an outer wall extending about and spaced from the cavity wall, and a hydraulic circuit for applying a hydraulic pressure to the moveable member to move at least a part of the cavity wall away from the outer wall to apply a compressive force to a comestible located within the cavity, and to urge the outer wall towards the chamber wall.

Preferably, the cavity wall and the outer wall are spaced by a distance no greater than 5 mm, more preferably by a distance no greater 1 mm. The outer wall is preferably attached to the chamber, and preferably abuts the chamber wall. More preferably, the outer wall lies substantially flush with part of the chamber wall. This reduces the likelihood of leakage between the outer wall and the chamber wall.

Preferably, the cavity wall is formed from plastics material, preferably polyurethane. Polyurethane is inexpensive to manufacture and has a good strength and tear resistance.

Preferably, at least a part of the cavity is substantially cylindrical. For example, the cavity wall may have a cylindrical portion and a domed base portion. This shape of the cavity wall is advantageous because the cavity is shaped to closely follow the shape of a comestible, such as a fruit which is routinely placed in a juice extractor, and so can achieve effective compression thereof to extract a relatively high quantity of juice from the comestible. Therefore, in a fifth aspect the present invention provides apparatus for extracting juice from a comestible, the apparatus comprising a cavity for receiving a comestible, the cavity comprising a cavity wall movable in response to an applied hydraulic force so as to apply a compressive force to a comestible received in the cavity, wherein the cavity wall has a cylindrical portion and a domed base portion.

Preferably, the cavity wall extends about an axis, and at least a part of the domed base portion of the cavity wall is arranged to apply a compressive force to the comestible in a direction extending along the axis. It is desirable that the chamber wall also has a cylindrical portion and a domed base portion so that the cavity wall closely follows the chamber wall.

The apparatus may comprise a biasing member for urging at least a part of the cavity wall inwardly. Advantageously, the biasing member can provide a force additional to the hydraulic force so that the cavity wall can be urged in a chosen direction to control the compression of the comestible. Therefore, in a sixth aspect the present invention provides apparatus for extracting juice from a comestible, the apparatus comprising a cavity for receiving a comestible, the cavity having a cavity wall movable in response to an applied hydraulic force so as to apply a compressive force to a comestible located within the cavity, and a biasing member for urging at least a part of the cavity wall inwardly.

Preferably, the biasing member is arranged to assist the applied hydraulic force to move said at least a part of the cavity wall inwardly.

Preferably, the cavity wall extends about axis and the biasing member is arranged to urge said at least a part of the cavity wall along said axis.

Preferably, the cavity wall has a base portion and the biasing member is arranged to urge the base portion of the cavity wall along said axis. More preferably, the base portion of the cavity wall is domed, and the biasing member is arranged to urge a central portion of the base portion of the cavity wall along said axis. This arrangement enables the comestible to be lifted upwardly in the cavity by the combined actions of the biasing member and the hydraulic pressure.

The biasing member is preferably located between the chamber wall and the cavity wall. The biasing member is preferably located within the fluid cavity.

It is preferred that the biasing member comprises a resilient member, which preferably in the form of a spring.

Preferably, the apparatus comprises a closure member for closing the open end of the cavity through which a comestible is introduced to the cavity, the biasing member being arranged to urge said at least part of the cavity wall towards the closure member. The apparatus preferably comprises motorised means for effecting relative rotation between the chamber and the closure member to secure the closure member to the chamber. By providing such an arrangement, the closure member can be easily and reliably secured to the chamber prior to a juicing operation. Therefore, in a seventh aspect the present invention provides apparatus for extracting juice from a comestible, the apparatus comprising a chamber having an aperture through which a comestible is introduced to the chamber, a securable closure member for closing the aperture, means for applying a compressive force to a comestible located within the chamber, and motorised means for effecting relative rotation between the chamber and the closure member to secure the closure member to the chamber.

Preferably, said means for effecting relative rotation between the chamber and the closure member is arranged to rotate the chamber relative to the closure member. It is desirable that said means for effecting relative rotation between the chamber and the closure member comprises a motor drive for rotating the chamber relative to the closure member. It is also preferred that the motor drive is located beneath the chamber.

The apparatus preferably comprises an outer casing within which the chamber is located. The casing preferably has a moveable lid attached thereto, with the closure member being connected to the lid. This can enable the closure member to be easily located over the aperture through simply closing the lid. Preferably, the lid is pivotable relative to the casing between open and closed positions.

It is preferable that the closure member and the chamber comprise co-operating features for securing the closure member to the chamber upon relative rotation therebetween. These features preferably comprise a plurality of lugs located on one of the chamber and the closure member, and a plurality of grooves located on the other one of the chamber and the closure member for receiving the lugs upon said relative rotation.

The hydraulic circuit is preferably a closed circuit located entirely within the outer casing of the apparatus. By providing a closed circuit, an external source of fluid is not required. As an external source of fluid is not required, the apparatus can be used in environments where a source of fluid is unavailable or at least not available in a convenient location. Further, because there is no external access to the hydraulic circuit, there is a reduced risk of contamination. The risk of contamination is reduced both in terms of contaminants (for example, acidic fruit juices) entering the hydraulic circuit, potentially damaging its internal components and in terms of safety for a user, whereby the risk of fluid from the hydraulic circuit becoming mixed with juice extracted from a comestible is reduced. Therefore, in an eighth aspect the present invention provides apparatus for extracting juice from a comestible, the apparatus comprising a housing within which is located a cavity for receiving a comestible, the cavity having a moveable cavity wall, and a hydraulic circuit for applying a hydraulic pressure to the cavity wall so as to apply a compressive force to a comestible located in the cavity, wherein the hydraulic circuit is a closed circuit located entirely within the housing.

It is preferred that the hydraulic circuit comprises a reservoir for storing a volume of fluid for applying the hydraulic force to the cavity wall. At least a part of the reservoir is preferably deformable in response to a change in the amount of fluid within the reservoir. Preferably, the reservoir comprises a flexible material, preferably polyurethane. Preferably, the reservoir surrounds at least a part of the cavity. This arrangement allows the reservoir effectively to use the available space within the apparatus.

The hydraulic circuit preferably comprises an electrically-operated pumping arrangement. An electrically-operated pumping arrangement allows the apparatus to be compact and easy to use when compared to other alternatives, for example, hand pumps, water mains connections or compressed air lines. The pumping arrangement may comprise a gear pump for pumping fluid towards, and away from, the cavity wall. Alternatively, the pumping arrangement may comprise two pumps which are preferably arranged in parallel. These pumps may have different pumping performances, and/or different pumping mechanisms. For example, one of the pumps may be a piston pump, whereas another one of the pumps may be a centrifugal pump.

The pumping arrangement is preferably operable in a first mode to supply fluid to the fluid cavity and in a second mode to remove fluid from the fluid cavity. The nature of the pumping arrangement allows the fluid to be removed rapidly and easily from the cavity after a juicing operation so that the cavity wall deflates to a size that enables a user to grasp easily the remains of a comestible after a juicing operation. Therefore, in a ninth aspect the present invention provides apparatus for extracting juice from a comestible, the apparatus comprising a cavity for receiving a comestible, the cavity having a moveable cavity wall, and a hydraulic circuit for applying a hydraulic force to the cavity wall so as to apply a compressive force to the comestible, wherein the hydraulic circuit comprises a fluid cavity for receiving fluid for applying the hydraulic force to the cavity wall, and a pumping arrangement operable in a first mode to supply fluid to the fluid cavity and in a second mode to remove fluid from the fluid cavity.

It is preferred that the apparatus comprises a cutter for cutting a comestible located within the cavity. The biasing member is preferably arranged to urge said at least part of the cavity wall towards the cutter. The cutter may be connected to the closure member, or it may be moveable into the chamber through an aperture formed in the closure member. Providing a cutter which is moveable into the cavity allows the cutter to be in a retracted position at the time the comestible is introduced to the cavity. This can provide an important safety feature for an appliance intended for domestic use, as the user is not exposed to any sharp cutting edge or blade of the cutter when the comestible is introduced to the cavity. Therefore, in a tenth aspect the present invention provides apparatus for extracting juice from a comestible, the apparatus comprising a cavity for receiving a comestible, the cavity having a cavity wall movable in response to an applied hydraulic force so as to apply a compressive force to a comestible within the cavity, and a cutter moveable between a retracted position in which the cutter lies outside the cavity and an extended position in which the cutter projects into the cavity.

The cutter is preferably movable along an axis about which the cavity extends. The apparatus preferably comprises a linear drive for driving the cutter between the retracted position and the extended position. The linear drive preferably comprises a motor and a gear arrangement drivable by the motor to drive the cutter between the retracted position and the extended position. The gear arrangement preferably comprises at least one rack and pinion gear arrangement, more preferably two rack and pinion arrangements each located on opposing sides of the cutter. By locating two gear arrangements on opposing sides of the cutter, there is no resultant torque when the cutter is driven into the cavity, reducing the strain on the apparatus.

The apparatus preferably comprises inhibiting means for inhibiting contact between the cavity wall and the cutter. Inhibiting contact between the cavity wall and the cutter can improve the reliability of the apparatus by significantly reducing the risk of the cavity wall becoming ruptured during a juicing operation. The inhibiting means may comprise a shield member located between the cavity wall and the cutter. The shield member can thus provide a physical barrier which prevents the cutter from contacting the cavity wall. Preferably, the shield member is located adjacent the cavity wall to maximise the distance by which the cutter may extend into the cavity. The shield member is preferably moveable with the cavity wall, and may form part of the removable liner.

Alternatively, the inhibiting means may be arranged to control movement of the cutter relative to the cavity so that the cutter is prevented from contacting the cavity wall. The inhibiting means may comprise a sensor or other means for detecting the position of the cutter relative to the cavity wall. A signal emitted from the sensor may be used to control movement of either the cutter or the cavity wall to inhibit contact therebetween. For example, the inhibiting means may be arranged to control movement of the cutter in response to the volume of fluid in the fluid cavity.

The hydraulic circuit is preferably arranged to apply a first, relatively low hydraulic force to the cavity wall to cause the cavity wall to support the comestible within the cavity for cutting thereof by the cutter, and a second, relatively high hydraulic force to the cavity wall subsequent to the cutting of the comestible to cause the cavity wall to compress the comestible to extract juice therefrom. This two-staged application of a hydraulic force to the cavity wall can enable the comestible to be supported by the cavity wall prior to contact between the cutter and the comestible, thereby preventing the comestible from slipping out of position when the cutter contacts the comestible. This can enable accurate and reproducible cutting of a comestible prior to the extraction of juice therefrom. Therefore, in an eleventh aspect the present invention provides apparatus for extracting juice from a comestible, the apparatus comprising a cavity for receiving a comestible, a hydraulic circuit and a cutter moveable relative to the cavity to cut a comestible located therein, the cavity having a cavity wall movable in response to a hydraulic force applied thereto by the hydraulic circuit to contact a comestible in the cavity, wherein the hydraulic circuit is arranged to apply a first, relatively low hydraulic force to the cavity wall to cause the cavity wall to support the comestible within the cavity for cutting thereof by the cutter, and a second, relatively high hydraulic force to the cavity wall subsequent to the cutting of the comestible to cause the cavity wall to compress the comestible to extract juice therefrom.

Preferably, the hydraulic circuit is arranged to apply a first hydraulic force to the cavity of sufficient magnitude to apply a pressure in the range from 0.3 to 0.7 bar to the cavity wall. Preferably, the hydraulic circuit is arranged to apply a second hydraulic force to the cavity of sufficient magnitude to apply a pressure in the range from 5 to 20 bar to the cavity wall. This pressure is sufficient to crush most comestibles to extract juice therefrom.

In a twelfth aspect, the present invention provides a method of extracting juice from a comestible. The method preferably comprises the steps of:
locating a comestible within a cavity having a moveable cavity wall extending about an axis; and
applying a hydraulic force to cause the cavity wall to form a plurality of lobes spaced about the axis for applying a compressive force to the comestible.

Preferably, the apparatus is in the form of a domestic juice extractor.

Features described above in connection with the first aspect of the invention are equally applicable to any of the second to twelfth aspects, and vice versa. Features described above in connection with apparatus aspects of the invention are also equally applicable to the method aspect of the invention.

An embodiment of the invention will now be described with reference to the accompanying drawings, in which:
Figure 1 is a perspective view of a juice extractor according to the present invention;
Figure 2 is a section through the juice extractor of Figure 1;
Figure 3 is a perspective view of a juicing chamber of the juice extractor of Figure 1;
Figure 4 is a plan view of the juicing chamber of Figure 3;
Figure 5 is a section through the juicing chamber of Figure 3 taken along the line A-A of Figure 4, and with a flexible member and a removable liner located therein;
Figure 6 is a perspective view of the flexible member of Figure 5;
Figure 7 is a side view of the flexible member of Figure 6;
Figure 8 is a section through the flexible member of Figure 6 taken along the line B-B of Figure 7;
Figure 9 is a magnified view of a part of Figure 8;
Figure 10 is a perspective view of a removable liner forming part of the juicing chamber shown in Figure 5;
Figure 11 is a plan view of the removable liner of Figure 10;
Figure 12 is a section through the removable liner of Figure 10 taken along the line C-C of Figure 11;
Figure 13 is a perspective view of a lower chassis of the juice extractor of Figure 1;
Figure 14 is a front view of the lower chassis of Figure 13;
Figure 15 is a side section of the lower chassis of Figure 13 taken along the line D-D of Figure 14;
Figure 16 is a schematic of a hydraulic circuit forming a part of the juice extractor of Figure 1 in a first mode;
Figure 17 is a schematic of the hydraulic circuit of Figure 16 in a second mode;
Figure 18 is a perspective view of a flexible reservoir forming part of the juice extractor of Figure 1;
Figure 19 is a plan view of the flexible reservoir of Figure 18;
Figure 20 is a side view of a reversible valve removed from the remainder of the juice extractor;
Figure 21 is a section taken along the line E-E of Figure 20 showing the reversible valve in a first mode of operation;
Figure 22 is a section taken along the line E-E of Figure 20 showing the reversible valve in a second mode of operation;
Figure 23 is a section through the juice extractor of Figure 1 showing a juice collection unit in a first configuration;
Figure 24 is a section through the juice extractor of Figure 1 showing the juice collection unit in a second configuration;
Figure 25 is a perspective view of the juice extractor of Figure 1 showing an access door in an open configuration;
Figure 26 is a side section through the juice extractor as shown in Figure 25; and
Figure 27 is a section through the flexible member similar to Figure 8 but showing the flexible member in an expanded state.

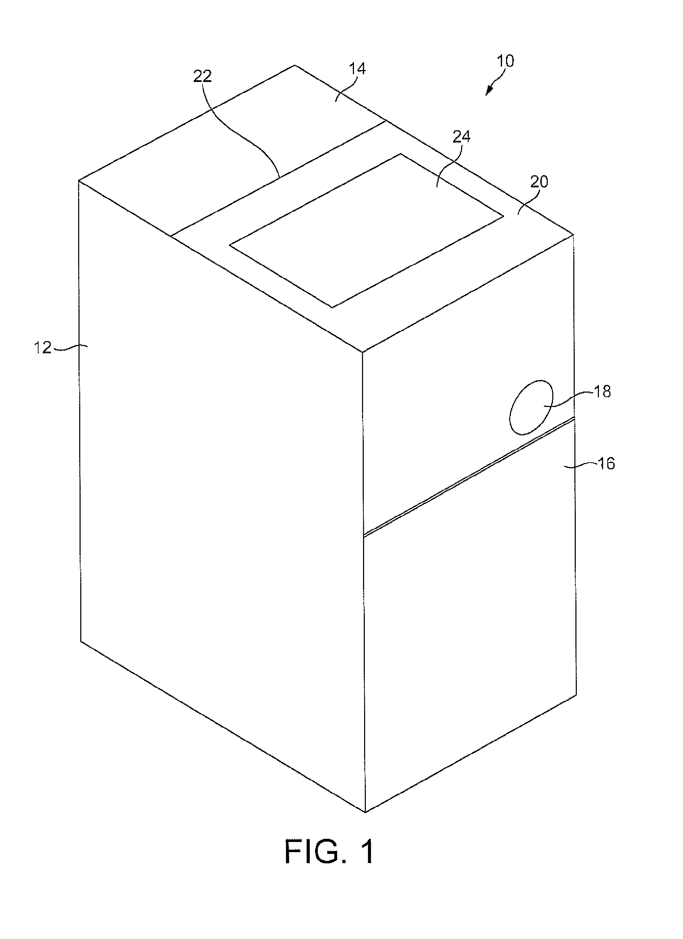

Figure 1 illustrates a juice extractor 10 according to the present invention. The juice extractor 10 is in the form of a small domestic appliance and is appropriate for domestic use, for example in a kitchen environment. The juice extractor 10 has a substantially cuboid outer casing 12. The outer casing has an upper surface 14 and a front surface 16. A spout 18 is located in the front surface 16 of the outer casing 12. The spout 18 is extendible to dispense juice from the juice extractor 10. However, in Figure 1 the spout 18 is shown in a retracted position in which the spout 18 is stored within the outer casing 12 of the juice extractor 10.

An access door 20 is formed in the outer casing 12. The access door 20 is L-shaped and forms a part of both the upper and front surfaces 14, 16 of the outer casing 12. The access door 20 has a hinge 22 adjacent the upper surface 14 to enable it to be pivotably opened in an upward direction. When the access door 20 is open, comestibles (for example, fruit or vegetables) can be inserted into the interior of the juice extractor 10 for juicing. The juice extractor 10 has a control panel 24 located on the upper surface 14 for operating the juice extractor 10.

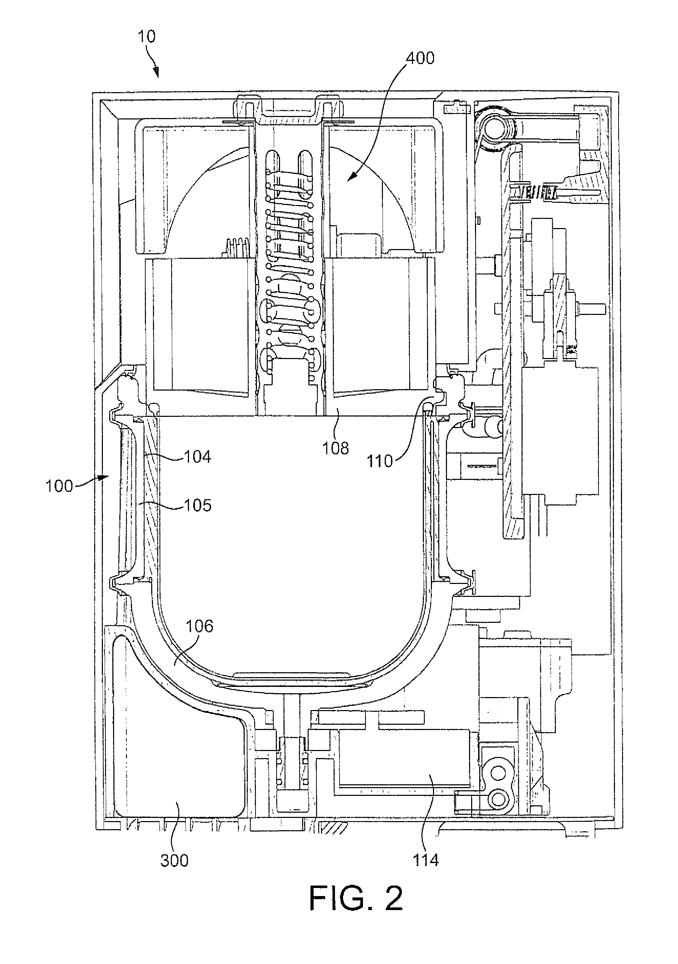

Figure 2 is a section through the juice extractor 10 showing the internal components in more detail. The juice extractor 10 comprises a juicing unit 100, a pump arrangement 200, a hydraulic reservoir assembly 300 and a juice collection unit 400.

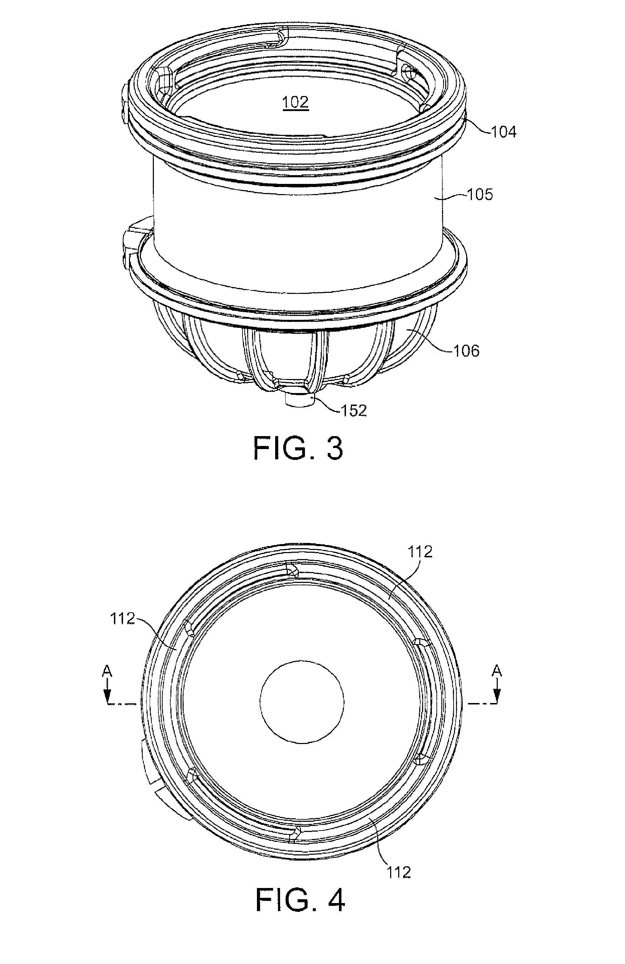

Figures 3 and 4 illustrate a juicing chamber 102 of the juicing unit 100. The juicing chamber 102 has a chamber wall 104. The chamber wall 104 has a cylindrical upper portion 105 and a domed base portion 106. Returning to Figure 2, a closure member 108 is provided for closing an open upper end of the chamber 102 during a juicing operation. The closure member 108 is connected to the access door 20 so that the closure member 108 pivots upwardly with the access door 20 when the access door 20 is opened. This will be described in more detail later.

The closure member 108 seals the upper end of the chamber wall 104 by means of three lugs 110 located on the outer periphery of the closure member 108 which engage with cooperating grooves 112 formed in the upper end of the chamber wall 104. The lugs 110 engage with the grooves 112 in a bayonet-type fitting by means of relative rotation between the closure member 108 and the chamber 102.

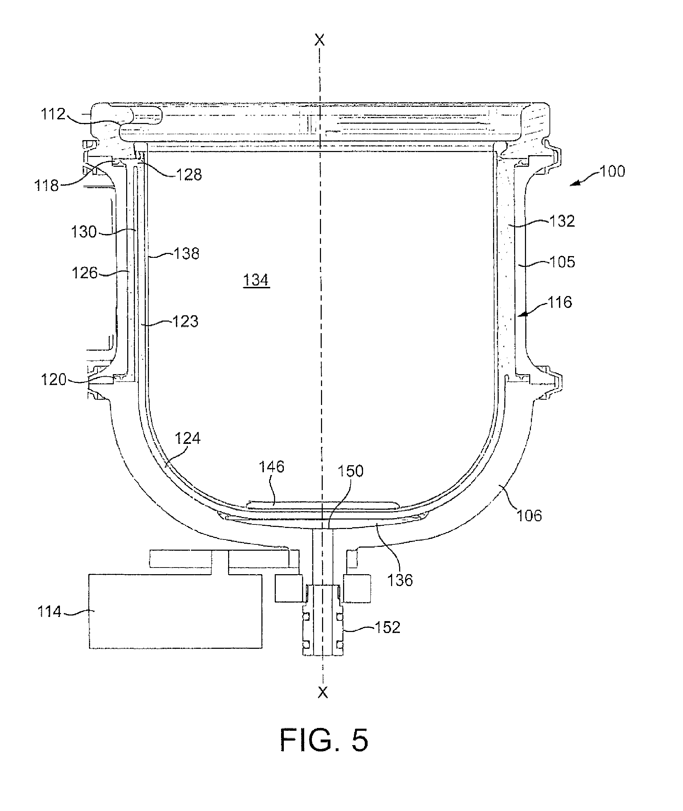

Relative rotation between the chamber 102 and the closure member 108 is achieved by means of a motor and bearing assembly 114 located below the chamber 102. The motor and bearing assembly 114 is located in a sealed position below the chamber 102, away from potential contamination from extracted juice and solids. This improves the robustness of the appliance and provides further safety for the user, because the motor and bearing assembly 114 is hidden below the chamber 102, reducing the risk of injury to a user through accidental contact with these components. In this embodiment the motor and bearing assembly 114 rotates the chamber 102 about an axis X-X shown in Figure 5. This enables the closure member 108 to be sealed to the chamber 102.

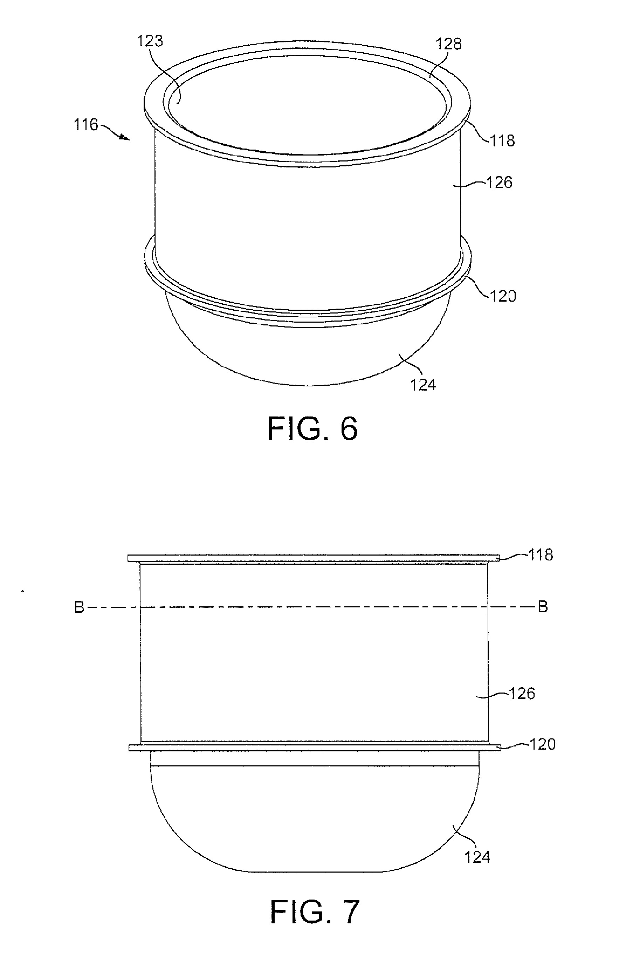

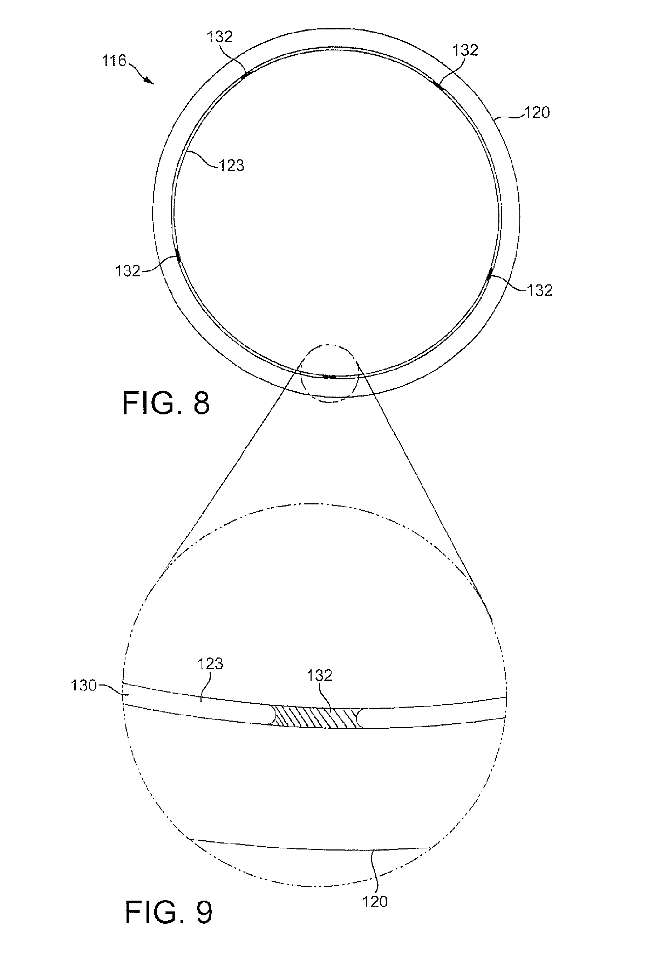

Figure 5 illustrates a movable member 116 located within the chamber 102. The movable member 116 is attached to the chamber wall 104 by two annular rings 118, 120 integral therewith, and substantially conforms to the inner surface of the chamber 102. Figures 6 to 9 illustrate the movable member 116 removed from the chamber 102.

The movable member 116 is formed from a flexible, hard-wearing plastic material such as polyurethane. It is preferred that the movable member 116 is formed in one piece, although this is not essential. The movable member 116 comprises an inner, cavity wall 122 having a cylindrical portion 123 and a domed base portion 124, and an outer wall 126. The outer wall 126 is located concentric with, and spaced from, the cavity wall 122 in the radial direction. The cavity wall 122 and the outer wall 126 are integral with one another and connected by a connecting portion 128 located at an upper end of the movable member 116. The cavity wall 122, the outer wall 126 and the connecting portion 128 are arranged such that the cavity wall 122 of the movable member 116 appears to have been folded back on itself to form the outer wall 126. In this embodiment, the cavity wall 122 and outer wall 126 are spaced by 1 mm to form a narrow annular pocket 130 therebetween. The annular pocket 130 has a sealed upper end, and an open lower end. The purpose of the annular pocket 130 will be described later.

A plurality of ribs 132 are formed between the cavity wall 122 and outer wall 126. The ribs 132 form a part of the movable member 116 and are formed integrally with the cavity wall 122 and the outer wall 126. In this embodiment, five ribs 132 are provided. The ribs 132 extend parallel to, and are equi-spaced about, the axis X-X. The ribs 132 extend between the cavity wall 122 and the outer wall 126 and function as restraining members which tether the cavity wall 122 to the outer wall 126 at a plurality of spaced restraining locations.

The two annular securing rings 118, 120 are formed on the outer periphery of the outer wall 126 at the upper end and at the lower end thereof respectively. The securing rings 118, 120 secure the movable member 116 to the chamber wall 104 of the chamber 102 in a fluid-tight manner.

Referring back to Figure 5, the cavity wall 122 of the movable member 116 delimits the chamber 102 into two cavities, namely a comestible cavity 134 and a fluid cavity 136. The fluid cavity 136 is delimited at a lower end by the domed base portion 124 of the cavity wall 122 and the domed base portion 106 of the chamber wall 104, and at an upper end by the cavity wall 122 and the outer wall 126. The annular pocket 130 thus forms a part of the fluid cavity 136. The annular securing rings 118, 120 ensure that the fluid cavity 136 is sealed tightly.

Further, the chamber 102 has a shallow step in the region where the cylindrical upper portion 105 of the chamber wall 104 meets the domed base portion 106 of the chamber wall 104. This ensures that the outer wall 126 lies substantially flush with the domed base portion 106 of the chamber wall 104, enhancing the sealing therebetween.

As shown in Figure 5, at rest the domed base portion 124 of the cavity wall 122 substantially conforms to the inner surface of the domed base portion 106 of the chamber wall 104. The domed base portion 124 of the cavity wall 122 contacts the domed base portion 106 of the chamber wall 104 over the majority of the surface area of the domed base portion 124. The purpose of this will be described later.

A removable liner 138 is located within the comestible cavity 134 and is shaped substantially to conform to the inner surface of the cavity wall 122 of the movable member 116. The removable liner 138 is removable upwardly out of the comestible cavity 134 through the open upper end of the chamber 102.

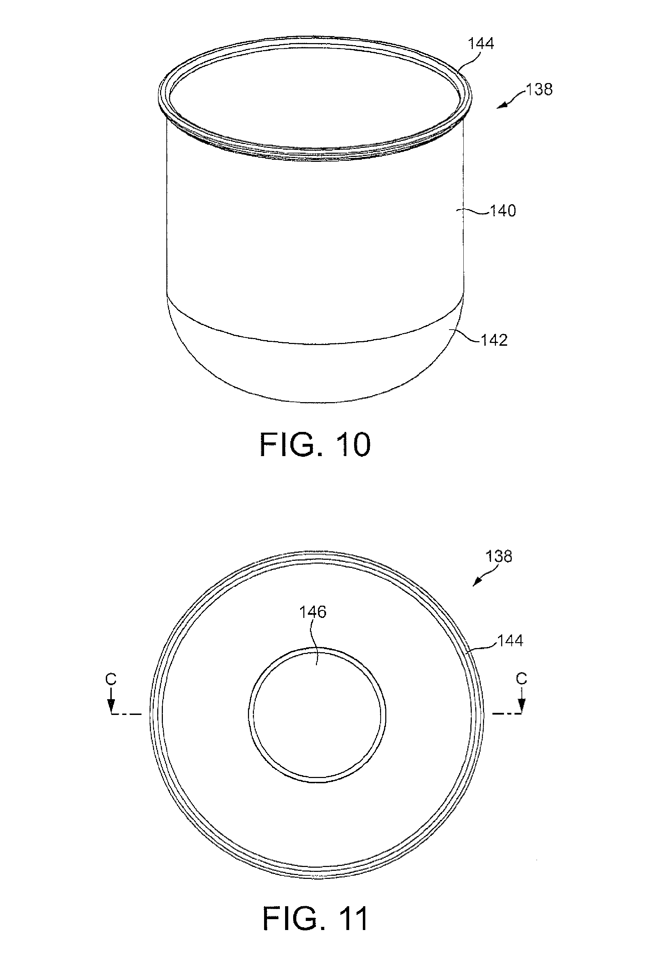

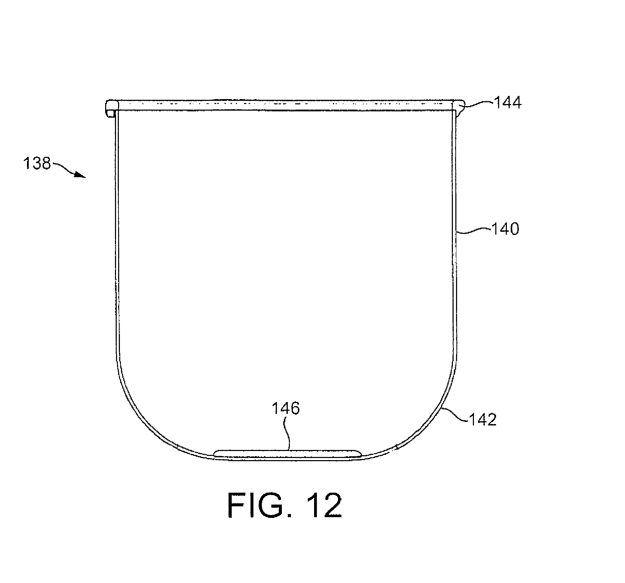

The removable liner 138 is shown in more detail in Figures 10 to 12. In these figures, the removable liner 138 is shown removed from the remainder of the juice extractor 10. The liner 138 forms a pocket arranged to receive a comestible. The pocket is sized and shaped to contain the whole of a comestible which may be accommodated within the chamber 102 and to prevent contact between the comestible and the cavity wall 122 when the removable liner 138 is located in the comestible cavity 134. The removable liner 138 has a cylindrical liner wall 140 with a domed base portion 142. The liner wall 140 is made from a flexible and washable material. In this embodiment, the liner wall 140 is formed from a thin sheet of polyurethane, which has the added advantage of having a good strength and having a good resistance to tearing.

The open upper end of the liner 138 has a seating ring 144 moulded therein. The seating ring 144 helps to maintain the substantially cylindrical shape of the removable liner 138 and aids seating the removable liner 138 inside the comestible cavity 134.

A cylindrical plate 146 is located in the domed base portion 142 of the removable liner 138. The cylindrical plate 146 is over-moulded into the removable liner 138, although this is not essential. The cylindrical plate 146 is made from a more rigid material than the remainder of the liner wall 140. In this embodiment, the cylindrical plate 146 is made from a rigid plastics material such as Perspex or ABS. Alternatively, the cylindrical plate 146 may be formed from a metallic material. The cylindrical plate 146 functions as a platform to support a comestible and, as described later, as a shield member for protecting the liner wall 140.

The removable liner 138 is removable from the comestible cavity 134 for cleaning following a juicing operation. Referring back to Figure 5, when inserted into the comestible cavity 134, the removable liner 138 is positioned such that the cylindrical plate 146 is located at the base of the comestible cavity 134.

A biasing member 148 is located within the fluid cavity 136 and attached to the inner surface of the domed base portion 106 of the chamber wall 104. In this embodiment, the biasing member 148 is a coil spring biased so as to urge the domed base portion 124 of the cavity wall 122, and the cylindrical plate 146 of the removable liner 138, inwardly, that is, towards the centre of the chamber 102.

In this embodiment, the biasing member 148 urges the domed base portion 124 of the cavity wall 122 upwardly in an axial direction, i.e. in the direction of the axis X-X passing through the centre of the chamber 102 and about which the chamber wall 104 extends. This is so that a comestible inserted into the comestible cavity 134 is pushed upwardly by the combined action of the biasing member 148 and the hydraulic pressure of the fluid within the fluid cavity 136 at the start of a juicing operation. In other words, the biasing member 148 acts to assist an applied hydraulic force to move the cavity wall 122 inwardly away from the chamber wall 104. The purpose of this movement will be described later.

A fluid port 150 is located in the domed base portion 106 of the chamber wall 104 and is arranged to operate as both an inlet and an outlet for fluid. The fluid port 150 is preferably located at, or towards, the base of the chamber 102, and preferably so that the axis X-X passes through the fluid port 150. This ensures an even distribution of fluid entering the fluid cavity 136 and an even pressure distribution within the fluid cavity 136. In this embodiment, the fluid port 150 is arranged symmetrically about the axis X-X.

A fluid conduit 152 is in communication with the fluid cavity 136 via the fluid port 150 and is arranged both to supply fluid to the fluid cavity 136 and to receive extracted fluid from the fluid cavity 136. When fluid is introduced into the fluid cavity 136, the cavity wall 122 of the movable member 116 moves under the action of the applied force generated by the hydraulic pressure of the fluid. This will be described later. The fluid conduit 152 preferably extends along the axis X-X. The fluid conduit 152 also provides an axle for the rotation of the chamber 102 by the motor and bearing assembly 114.

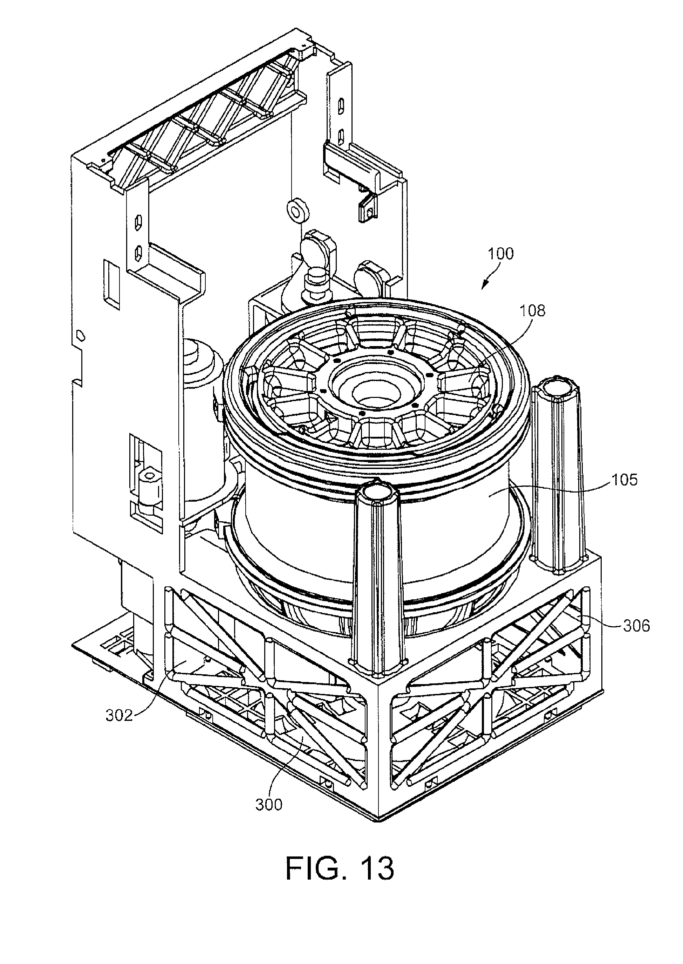

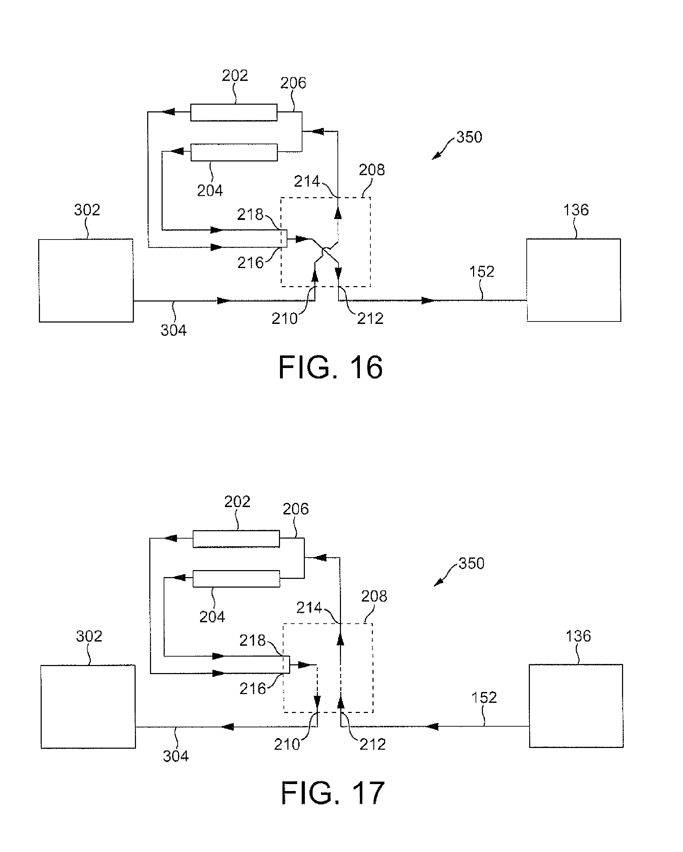

Figures 13 to 15 illustrate a lower chassis of the juice extractor 10. In these figures, the juicing unit 100, the pump arrangement 200 and the hydraulic reservoir assembly 300 are shown in more detail. The fluid cavity 136, which is part of the juicing unit 100, the pump arrangement 200 and the hydraulic reservoir assembly 300 form a hydraulic circuit 350. The hydraulic circuit 350 is illustrated schematically in Figures 16 and 17.

The hydraulic circuit 350 contains a hydraulic fluid. In this embodiment, the fluid is water. Water is non-toxic and food safe, making it ideal for use in domestic food preparation equipment such as the juice extractor 10. However, other fluids suitable for use in a domestic environment may also be used instead of water. Further, additives may be added to the water in the hydraulic circuit 350, for example anti-bacterial compounds or sterilising compounds which maintain the water in the hydraulic circuit 350 in a sanitary state.

The hydraulic circuit 350 is sealed and is a closed circuit. By this is meant that an external source of fluid (e.g. a mains water supply) is not required in order to operate the juice extractor 10 - the hydraulic circuit 350 is contained entirely within the juice extractor 10. As an external source of fluid is not required, the juice extractor 10 can be used in environments where a source of fluid is unavailable or at least not available in a convenient location. Further, because there is no external access to the hydraulic circuit 350 there is a reduced risk of contamination. The risk of contamination is reduced both in terms of contaminants (for example, acidic fruit juices) entering the hydraulic circuit 350, potentially damaging its internal components, and in terms of safety for a user, whereby the risk of fluid from the hydraulic circuit 350 becoming mixed with juice extracted from a comestible is reduced.

The pump arrangement 200 is electrically-operated and comprises a first pump 202, a second pump 204, a connecting conduit 206, and a reversible valve 208. Both of the first pump 202 and the second pump 204 are preferably electrically operated. The first pump 202 is a centrifugal pump arranged to move fluid through the hydraulic circuit 350 and the second pump 204 is an electromagnetically operated piston-type pump arranged to provide up to 15 bar of hydraulic pressure to compress a comestible and extract juice therefrom. The first pump 202 and the second pump 204 are connected in parallel, and are arranged to be operated simultaneously to pump the fluid around the hydraulic circuit 350. The connecting conduit 206 is a T-piece which connects the pumps 202, 204 to the reversible valve 208.

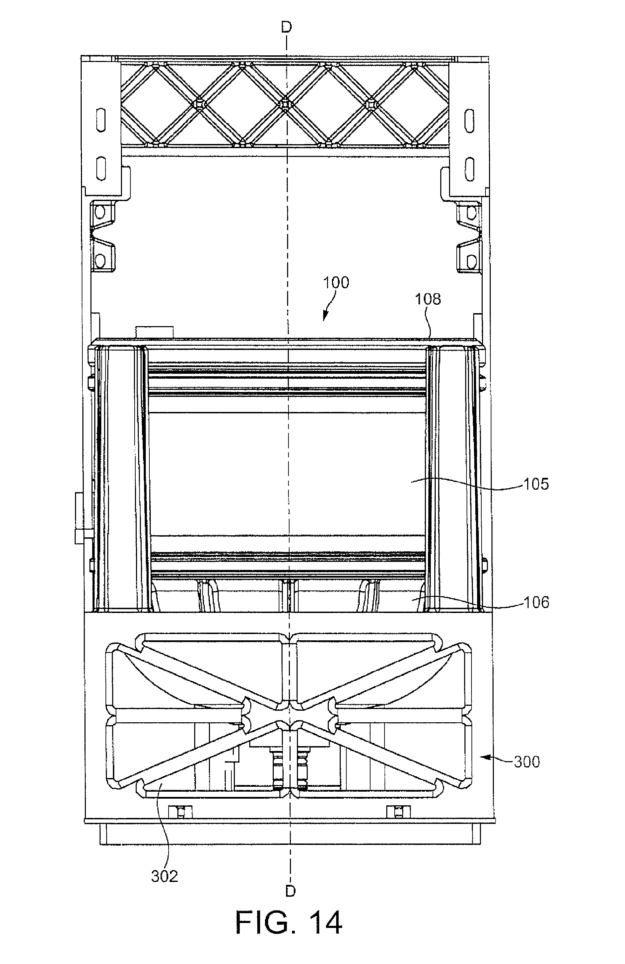

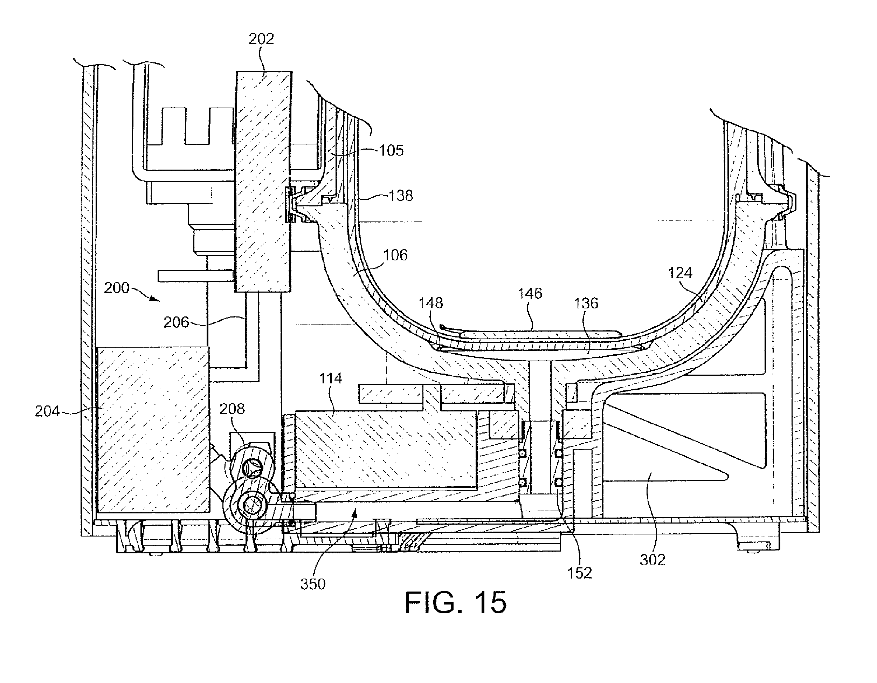

With reference to Figures 14 and 15, the hydraulic reservoir assembly 300 comprises a flexible reservoir 302 providing a source of fluid for pumping around the sealed hydraulic circuit 350. The flexible reservoir 302 is located towards the base of the lower chassis of the juice extractor 10 and is connected to the pump arrangement 200 by a reservoir conduit 304 extending therefrom. The flexible reservoir 302 is located within a reservoir space 306 formed in the base of the juice extractor 10.

The flexible reservoir 302 surrounds a part of the juicing chamber 102 (and thus surrounds a part of the cavity 122). This arrangement ensures that the available space within the outer casing 12 of the juice extractor 10 is used efficiently, concomitantly allowing the overall size of the juice extractor 10 to be reduced.

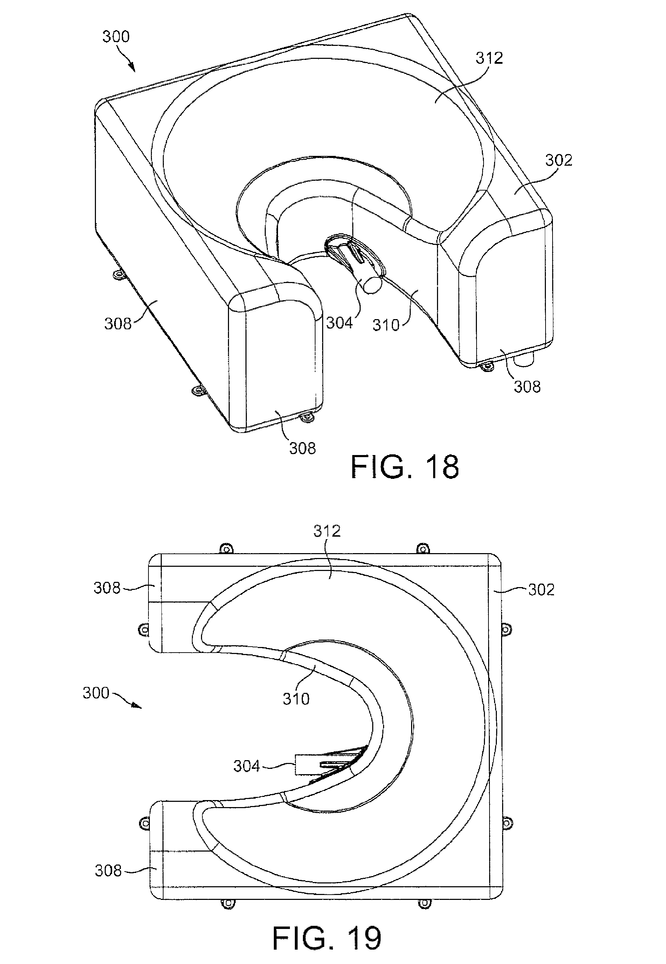

The flexible reservoir 302 is shown removed from the remainder of the juice extractor 10 in Figures 18 and 19. The flexible reservoir 302 is substantially U-shaped and has rectangular outer side walls 308 and curved inner walls 310. A curved upper part 312 of the inner walls 310 is arranged to conform to the shape of the outer surface of the chamber 102. The reservoir conduit 304 is formed in an inner wall 310 and supplies fluid from the flexible reservoir 302 to the fluid cavity 136 via the pump arrangement 200 and hydraulic reservoir assembly 300.

The flexible reservoir 302 is deformable. By this is meant that the flexible reservoir 302 is designed to collapse when the fluid therein is extracted and passed through the hydraulic circuit 350 to the fluid cavity 136. In order to withstand repeated juicing operations, the flexible reservoir 302 is made from a robust, yet flexible material such as polyurethane.

When in use, it is necessary for the fluid in the hydraulic circuit 350 to be pumped in both directions between the flexible reservoir 302 and the fluid cavity 136. During a juicing operation, fluid is pumped in a first direction from the flexible reservoir 302 and into the fluid cavity 136. This applies a hydraulic force to the cavity wall 122 in order to compress a comestible within the comestible cavity 134. However, at the end of a juicing operation, it is necessary to deflate the cavity wall 122 to enable the user to remove the remaining parts of the comestible from the comestible cavity 134. Therefore, the fluid is subsequently pumped in a second direction, opposite to the first direction, from the fluid cavity 136 and back to the flexible reservoir 302.

In this embodiment, the presence of the reversible valve 208 enables fluid to be pumped in both first and second directions around the hydraulic circuit 350. The reversible valve 208 is required because the first pump 202 and the second pumps 204 are only able to pump fluid in a single direction. However, as an alternative, the pumps 202, 204 and the reversible valve 208 could be replaced by a pump which is able to pump fluid in two directions, for example a gear pump.

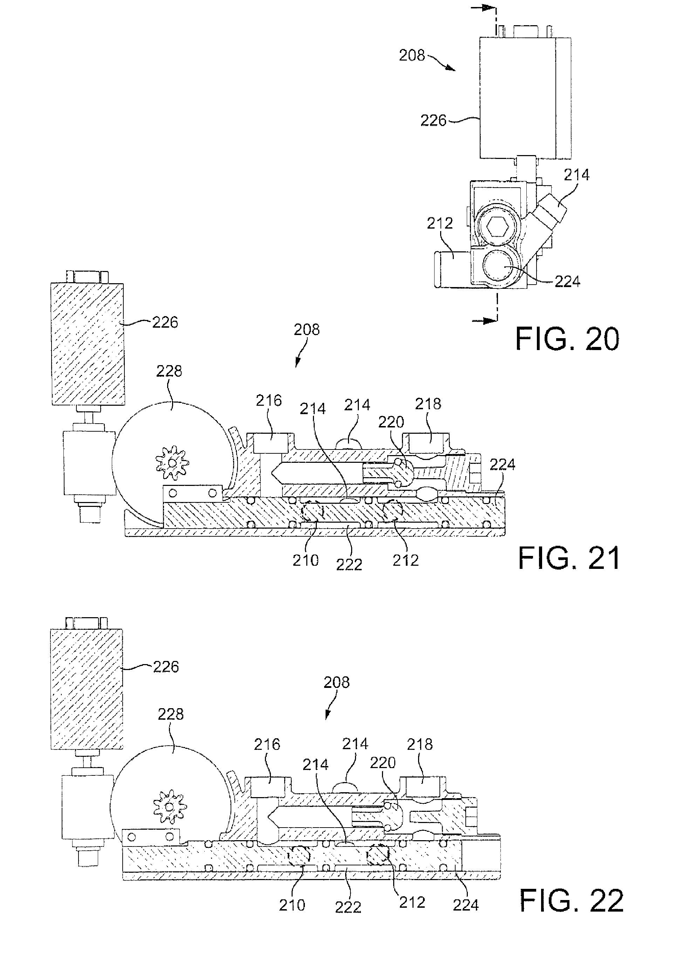

The reversible valve 208 is shown in Figures 20 to 22. The reversible valve 208 connects together the flexible reservoir 302, the fluid cavity 136 and the pumps 202, 204. The reversible valve 208 has first and second modes of operation. In the first mode of operation, the pumps 202, 204 operate to pump fluid in the first direction. In the second mode of operation, the pumps 202, 204 operate to pump fluid in the second direction.

Figure 21 shows the reversible valve 208 in the first mode, and Figure 22 shows the reversible valve 208 in the second mode. The reversible valve 208 comprises a reservoir connector 210 connected to the reservoir conduit 304 to convey fluid to and from the flexible reservoir 302, and a cavity connector 212 connected to the fluid conduit 152 to convey fluid to and from the fluid cavity 136. A first pump connector 214 is connected to the connecting conduit 206 which leads to the pumps 202, 204, and the second and third pump connectors 216, 218 are connected to outlets from the pumps 202, 204 respectively. A non-return valve 220 is located between the second and third pump connectors 216, 218. The purpose of the non-return valve 220 will be described later.

A channel 222 is located within the reversible valve 208 to provide a communication path between the reservoir connector 210 and the pump connectors 214, 216, 218, and between the cavity connector 212 and the pump connectors 214, 216, 218. A valve body 224 is located in the channel 222 and is moveable therein between a first position (which corresponds to the first mode shown in Figure 21) and a second position (which corresponds to the second mode shown in Figure 22). The movement of the valve body 224 is driven by a motor 226 via a rack and pinion gear arrangement 228.

The flow path through the hydraulic circuit 350 when the reversible valve 208 is in the first mode is shown in Figure 16. In this mode, the reservoir connection 210 is in fluid communication with the first pump connector 214 which leads to the connecting conduit 206. The outlets of the pumps 202, 204 are connected to the second and third pump connectors 216, 218 respectively, which are in fluid communication with the cavity connector 212 so that fluid can flow therethrough to the fluid cavity 136.

The flow path through the hydraulic circuit 350 when the reversible valve 208 is in the second mode is shown in Figure 17. In this mode, the cavity connector 212 is in fluid communication with the first pump connector 214 which leads to the connecting conduit 206. The outlets of the pumps 202, 204 remain connected to the second and third pump connectors 216, 218 respectively, which are now in fluid communication with the reservoir connector 210 so that fluid can flow therethrough to the flexible reservoir 302.

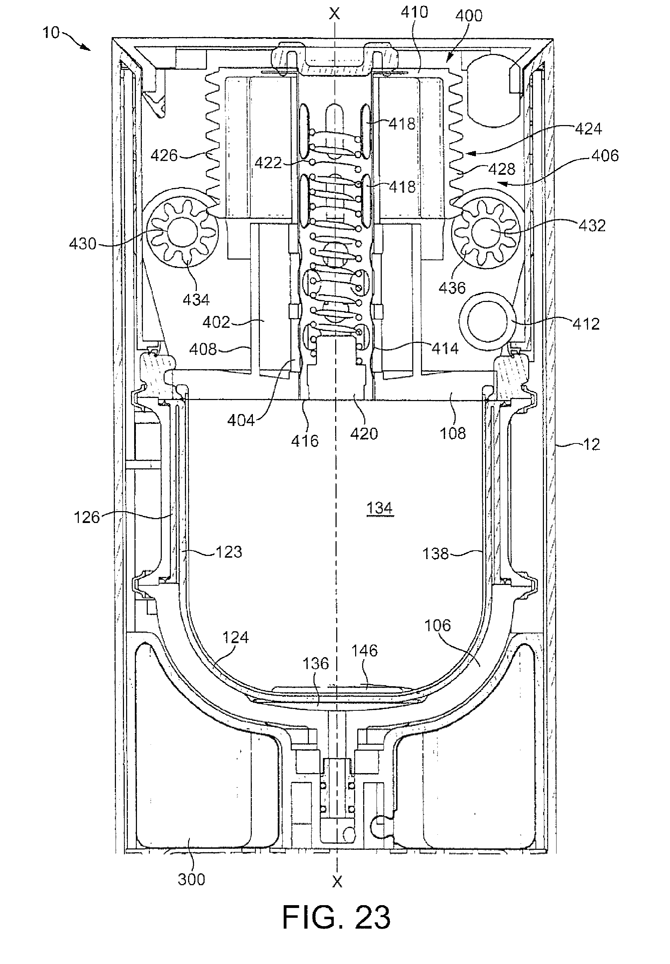

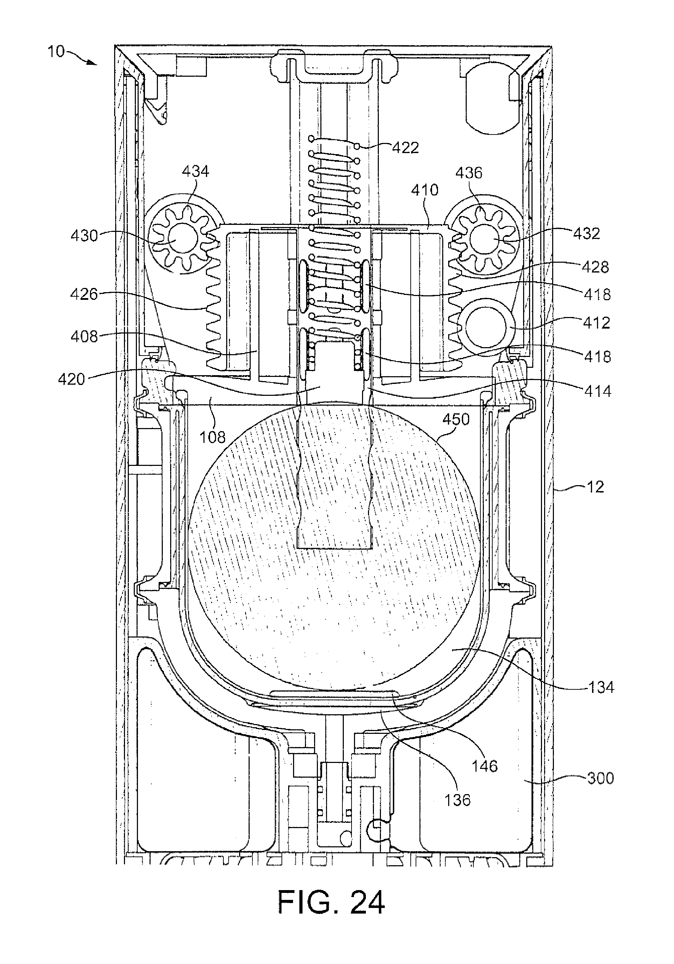

The mechanism by which juice is extracted from the comestible and supplied to a user will now be described. Figures 23 and 24 illustrate the juice collection unit 400 in two different configurations. Referring first to Figure 23, the juice collection unit 400 is located above the juicing unit 100. The closure member 108 forms a base for the juice collection unit 400. The juice collection unit 400 comprises a juice reservoir 402, a cutter 404 and a cutter drive mechanism 406.

The juice reservoir 402 is located between the closure member 108 and the upper surface 14 of the juice extractor 10. The juice reservoir 402 has a lower portion 408 which is attached to the closure member 108 and an upper portion 410 which is movable with the cutter drive mechanism 406. A dispensing conduit 412 is connected to the interior of the juice reservoir 402 and is in communication with the spout 18 such that juice can be dispensed from the spout 18.

The cutter 404 is shown in a retracted position in Figure 23. The cutter 404 is mounted substantially centrally in the juice reservoir 402 and comprises a hollow cylindrical sleeve 414. The sleeve 414 has a blade 416 for cutting into a comestible and a plurality of apertures 418. The apertures 418 are dimensioned and arranged such that juice from the comestible is able to flow out through the apertures 418 into the juice reservoir 402.

A plunger 420 is located inside the cylindrical sleeve 414. The plunger 420 is slidably moveable inside the sleeve 414. A spring 422 biases the plunger 420 into a position in which it lies at the lower end of the sleeve 414 and substantially level with the lower surface of the closure member 108. In this position, the plunger 420 lies immediately above the comestible cavity 134 when the closure member 108 is in the closed position.

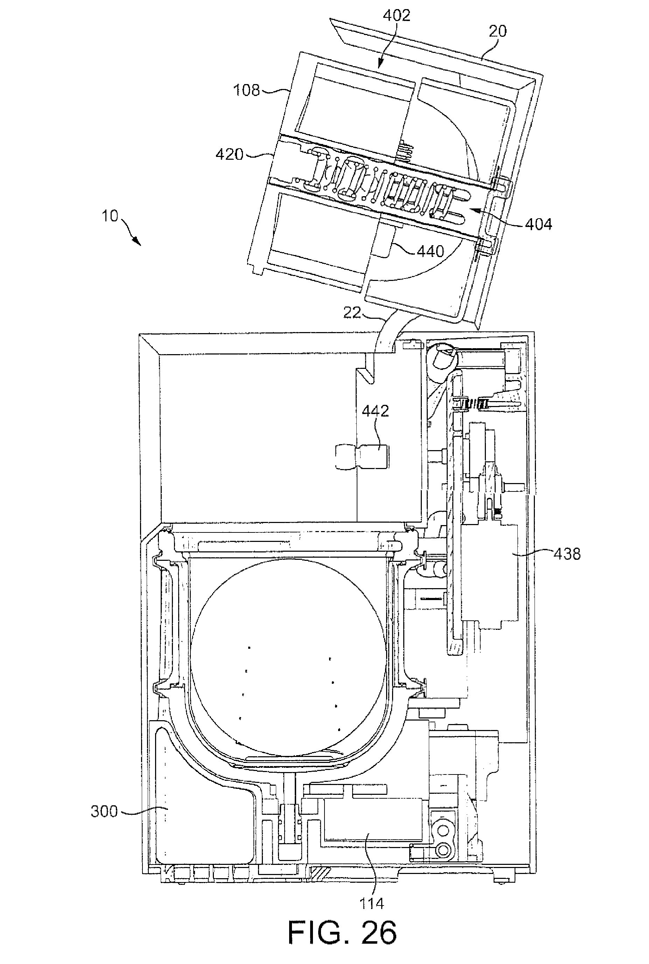

In this embodiment the cutter drive mechanism 406 is in the form of a liner drive for moving the cutter 404 relative to the chamber 102 along the axis X-X. The cutter drive mechanism 406 comprises a sleeve drive 424 attached to an upper end of the sleeve 414 and to the upper portion 410 of the juice reservoir 402. The sleeve drive 424 includes two drive racks 426, 428 each located on a respective side of the upper portion 410 of the juice reservoir 402. The cutter drive mechanism 406 further comprises first and second drive shafts 430, 432 each having a respective pinion gear 434, 436. Each pinion gear 434, 436 engages with a respective drive rack 426, 428. The drive shafts 430, 432 are connected to a cutter motor 438 (shown in Figure 26). By providing two separate drive shafts 430, 432, the cutter motor 438 applies an equal and opposite torque to each drive shaft 430, 432. This results in no net applied torque when the cutter motor 438 is operated, reducing the load applied to the structure of the juice extractor 10.

The cutter drive mechanism 406 is thus arranged to move the cutter 404 (including the sleeve 414, the sleeve drive 424 and the upper portion 410 of the juice reservoir 402) along the axis X-X between the retracted position and an extended position. Figure 24 illustrates the cutter 404 in an extended position. The extended position is used during juice extraction from a comestible. When the cutter 404 is in the extended position, the sleeve 414 cuts into and penetrates a comestible, for example a fruit 450, so that juice can be extracted therefrom.

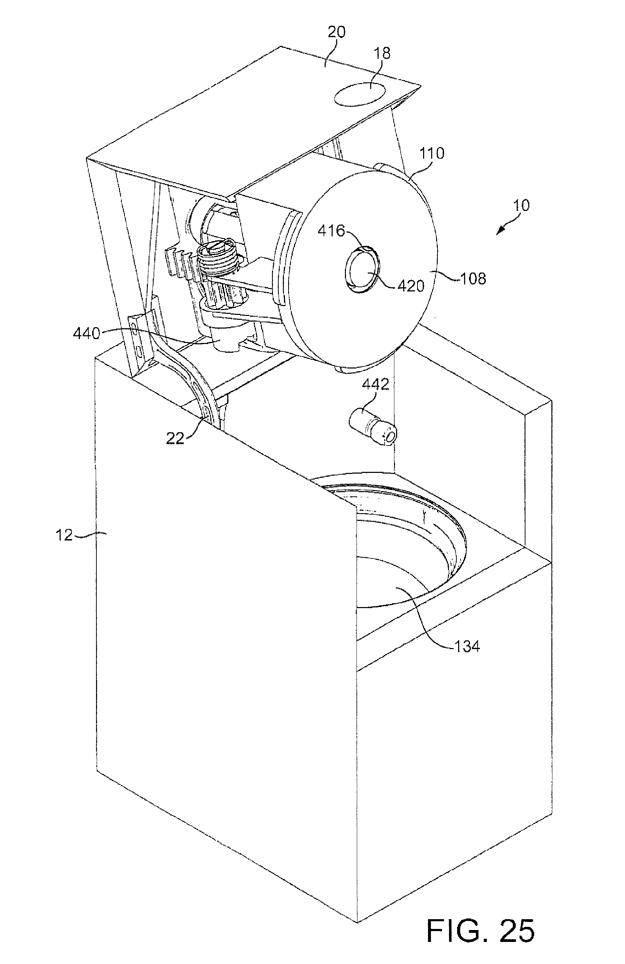

Figures 25 and 26 illustrate the juice extractor 10 with the access door 20 in an open position to allow a comestible to be inserted into the comestible cavity 134. The juice reservoir 402, the cutter 404 and a part of the cutter drive mechanism 406 move with the access door 20 when it is pivotably opened and closed. However, the cutter motor 438 is located within the outer casing 12 of the juice extractor 10 and does not move with the access door 20. The cutter drive mechanism 406 separates into two separate portions when the access door 20 is lifted. Each of the drive shafts 430, 432 is formed in two separable portions 440, 442 connectable by a ball which engages with a hexagonal drive dog. This arrangement does not require the cutter motor 438 to be mounted on the access door 20, which reduces the weight of the access door 20. Further, it improves the safety of the juice extractor 10 because the cutter 404 cannot be operated by the cutter motor 438 when the access door 20 is opened.

When the access door 20 is in this position, the juice reservoir 402 is removable for cleaning. The juice reservoir 402 can be secured to the access door 20 by any suitable means, such as clips, screws or a push fit arrangement (not shown), which enable the juice reservoir 402 to be readily disconnected from, and reconnected to, the access door 20 by the user.

In use, a user presses a button on the control panel 24 to release the access door 20. The access door 20 pivots upwardly about the hinge 22, revealing the internal parts of the juice extractor 10. The access door 20 is L-shaped and is spring loaded so that the access door 20 opens easily without undue effort from the user. When pivoted upwardly, the separable portions 440, 442 of each of the drive shafts 430, 432 separate so that the cutter 404 is disengaged from the cutter motor 438. This can be seen most clearly in Figures 25 and 26.

The following description relates to the juicing of a fruit, such as an orange. However, this is not to be taken as limiting and other comestibles may also be juiced in a similar way.

Once the access door 20 is open (as shown in Figures 25 and 26), the juicing chamber 102 is exposed and visible to the user. The user now has access to the comestible cavity 134. The removable liner 138 is located inside the comestible cavity 134 and substantially conforms to the shape of the movable member 116 which defines the comestible cavity 134. The domed base portion 142 of the liner wall 140 conforms to the domed base portion 124 of the cavity wall 122. The domed base portions 124, 142 are of sufficient diameter to receive a fruit such as a large orange or grapefruit.

The user then places a fruit 450 within the removable liner 138 located in the comestible cavity 134. Alternatively, the user can lift the removable liner 138 from the comestible cavity 134 and insert the fruit 450 therein before replacing the removable liner 138 within the comestible cavity 134. When located in the comestible cavity 134, the fruit 450 will sit at the domed base portion 142 of the removable liner 138 so that the fruit 450 is surrounded by the removable liner 138 and the cavity wall 122.

Once the fruit 450 has been loaded into the comestible cavity 134, the user closes the access door 20 and operates the juice extractor 10 using the control panel 24. When the juice extractor 10 starts a juicing operation, the spout 18 extends from within the outer casing 12. When in an extended position, the spout 18 projects from the outer casing 12. This allows extracted juice to be dispensed from the spout 18 into a suitable receptacle such as glass or mug.

When the access door 20 is closed, the closure member 108 is positioned directly above the chamber 102. The chamber 102 is then rotated by the motor and bearing arrangement 114 to secure the closure member 108 to the chamber 102 through engagement of the lugs 110 with the grooves 112 in a bayonet-type fashion. This ensures that the closure member 108 cannot be opened accidentally by the user during a juicing operation, for example by opening the access door 20.

Once the closure member 108 is secured to the chamber 102, the pumps 202, 204 are operated. The reversible valve 208 is placed in the first mode of operation so that the fluid flows in the first direction when the pumps 202, 204 are operated. Fluid from the flexible reservoir 302 is drawn along the reservoir conduit 304 to the reservoir connector 210. With the valve body 224 in the first position, the fluid passes through the channel 222 to the first pump connector 214 and thereon to the connecting conduit 206.

Fluid exhausted from the outlets of the pumps 202, 204 flows back into the reversible valve 208 through the second and third pump connectors 216, 218 respectively. In the first position of the valve body 224, the second and third pump connectors 216, 218 are placed in fluid communication with the cavity connector 212 so the fluid passes through part of the channel 222 to the cavity connector 212, and is subsequently conveyed to the fluid cavity 136 by the fluid conduit 152.

When fluid enters the fluid cavity 136, the fluid will initially fill the free space within the fluid cavity 136 without changing the shape thereof. During this phase, the non-return valve 228 functions to allow fluid flow from both pumps 202, 204 to pass through to the fluid cavity 136. However, once the fluid cavity 136 is filled with fluid, the pressure in the system increases. As mentioned previously, the second pump 204 is able to generate a pressure of up to 15 bar, whereas the first pump 202 has a maximum pressure delivery of only around 2 bar. When the pressure in the hydraulic circuit 350 exceeds pressure which can be delivered by the first pump 202, a pressure differential is created between the second and third pump connectors 216, 218. This pressure differential causes the non-return valve 228 to close thereby isolating the second pump connector 216 from the cavity connector 212. The second pump 204 remains in fluid communication with the cavity connector 212 and so acts to pressurise the fluid in the fluid cavity 136 up to a maximum deliverable pressure of 15 bar.

The hydraulic pressure of the fluid in the fluid cavity 136 exerts a force on the movable member 116. This force will act through the point of least resistance. The fluid port 150 (through which the fluid enters the fluid cavity 136) is located at the base of the chamber 102. Therefore, the initial force on the cavity wall 122 will be at the domed base portion 124 thereof. This effect is enhanced by the close contact between the domed base portion 124 of the cavity wall 122 and the domed base portion 106 of the chamber wall 104 because only a small volume of fluid is required to fill the region of the fluid cavity 136 therebetween before deformation of the cavity wall 122 occurs.

Additionally, the biasing member 148 urges the domed base portion 124 of the cavity wall 122 upwardly, working with the applied hydraulic force to deform the cavity wall 122. The biasing member 148 is located such that the biasing member 148 applies a force to the cylindrical plate 146 forming a part of the removable liner 138.

The overall effect of the forces acting on the movable member 116 is that the domed base portion 124 of the cavity wall 122 will initially deform upwardly. This action raises the fruit 450 in the comestible cavity 134 until the fruit 450 is held firmly between the domed base portion 124 of the movable member 116 and the underside of the closure member 108. This ensures that the fruit 450 does not move sideways relative to the axis X-X when the sleeve 414 of the cutter 404 commences its downward motion from the retracted position into the extended position.

As fluid is pumped into the fluid cavity 136, the hydraulic pressure will force fluid into the annular pocket 130 between the concentrically-arranged cylindrical upper portion 123 of the cavity wall 122 and the outer wall 126. The hydraulic pressure will urge the cylindrical upper portion 123 of the cavity wall 122 and the outer wall 126 apart. In this embodiment, the spacing of 1 mm between the cylindrical upper portion 123 of the cavity wall 122 and the outer wall 126 enables the fluid to flow easily therebetween but allows the annular pocket 130 to have a relatively small volume. This reduces the time required to fill the annular pocket 130 with fluid before deformation of the cylindrical upper portion 123 of the cavity wall 122 occurs.

Usefully, the fluid will apply a force to the outer wall 126 in the direction of the chamber wall 104. This reduces the risk of leakages occurring and ensures that a good seal is formed between the cylindrical upper portion 105 of the chamber wall 104 and the outer wall 126 of the movable member 116 when the pressure within the fluid cavity 136 is relatively high. By urging the outer wall 126 against the chamber wall 104, a more reliable seal can be achieved than with conventional seals which connect at a single point and so would be pulled apart from the chamber wall 104 when under pressure.

Parts of the cylindrical upper portion 123 of the cavity wall 122 are attached to the outer wall 126 by the ribs 132. These parts of the cylindrical upper portion 123 of the cavity wall 122 are restrained, or held, relative to the chamber 102. In other words these parts of the cylindrical upper portion 123 of the cavity wall 122 do not move, or only move by a relatively small amount, relative to the chamber 102 when the hydraulic force is applied to the cavity wall 122. It will be appreciated by those skilled in the art that, because the ribs 132 are manufactured from polyurethane, some movement is inevitable due to the elastic properties of such a plastics material.

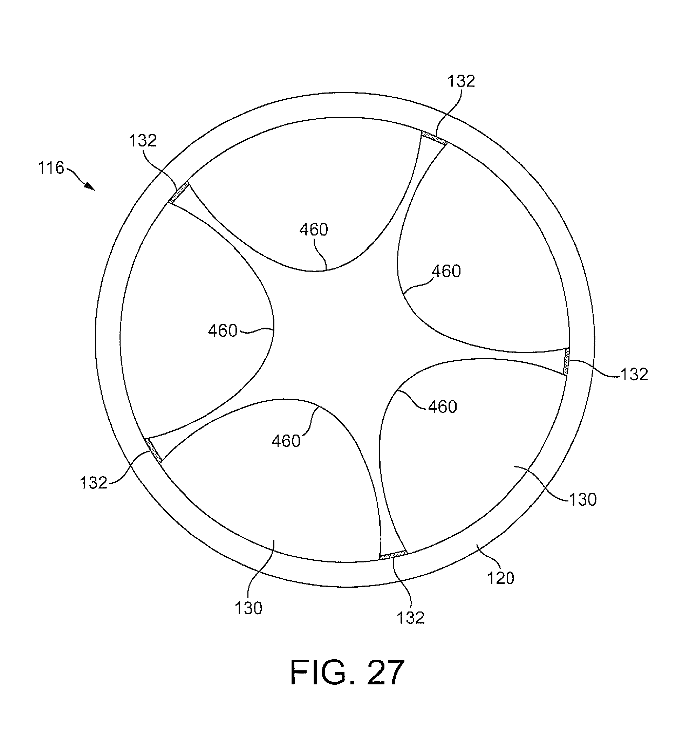

However, the parts of the cylindrical upper portion 123 of the cavity wall 122 between the ribs 132 are able to move to a greater degree under the applied hydraulic force. These parts expand towards the centre of the comestible cavity 134 in a balloon-like fashion to form a plurality of lobes 460 spaced about the axis X-X (the lobes can be seen in a fully expanded state in Figure 27). The lobes 460 will continue to expand until the fruit 450 is held firmly in a radial direction by the expanded lobes of the cylindrical upper portion 123 of the cavity wall 122. We have found that approximately 0.5 bar of pressure in the hydraulic circuit 350 is required to hold the fruit 450 firmly within the chamber but not to compress it to any significant degree. When this pressure is reached, the pumps 202, 204 stop temporarily.

An advantage of using a hydraulic arrangement is that substantially the same pressure is required to hold fruit of different sizes. This is because the applied hydraulic force will be distributed evenly around the cavity wall 122 of the movable member 116.

The cutter motor 438 is then activated to drive the sleeve 414 of the cutter 404 into the fruit 450. The blade 416 located on the sleeve 414 is sharp enough to cut through the skin of the fruit 450 and to penetrate the flesh. The sleeve 414 will continue to penetrate the interior of the fruit 450 until it reaches the extended position (as shown in Figure 24). As the sleeve 414 penetrates the fruit 450, a part of the fruit 450 (known as the core) will enter the hollow interior of the sleeve 414 and will push the plunger 420 upwardly.

It is possible that, in some circumstances, the sleeve 414 may move too far along the axis X-X and contact the domed base portion 124 of the cavity wall 122, for example, if a small fruit is being juiced. If the cavity wall 122 were to be cut by the blade 416, the juice extractor 10 would no longer function as hydraulic fluid would simply leak from the hydraulic circuit 350. Further, there is a risk of contamination of any extracted juice by the water leaking from the hydraulic circuit 350.

The cylindrical plate 146 formed in the removable liner 138 is arranged to prevent such an occurrence. The cylindrical plate 146 is made from a solid plastic material which cannot be penetrated by the blade 416. In other words, the cylindrical plate 146 functions as a shield member to inhibit the blade 416 of the cutter 404 from contacting the cavity wall 122 of the movable member 116. Therefore, should the sleeve 414 travel too far down into the comestible chamber 134, the blade 416 will impinge upon the cylindrical plate 146 to prevent the blade 416 from puncturing the movable member 116.

Once the cutter 404 is located in the extended position projecting into the cavity 134, the pumps 202, 204 are operated again in the first direction to generate further hydraulic pressure in the fluid cavity 136 and to expand further the lobes 460 of the cylindrical upper portion 123 of the cavity wall 122. This applies a force to the fruit 450 which is greater than that used to grip the fruit 450 before operation of the cutter 404. With the types of pumps 202, 204 described above, up to 15 bar of pressure can be applied to extract juice from the fruit 450 within the comestible cavity 134.

Figure 27 shows a section through the movable member 116 when the cylindrical upper portion 123 of the cavity wall 122 is in a fully expanded configuration. The five ribs 132 are equi-spaced from one another about the axis X-X and define five expanded lobes 460 therebetween formed by the inflated cylindrical upper portion 123 of the cavity wall 122. The lobes 460 expand at substantially the same rate under the applied hydraulic force. This is because the hydraulic force is evenly distributed around the cylindrical upper portion 123 of the cavity wall 122.

The lobes 460 of the cylindrical upper portion 123 of the cavity wall 122 reduce the volume of the comestible cavity 134 and concomitantly crush the fruit 450 located therein. The lobes 460 compress the fruit 450 in an approximately radial direction. However, other parts of the movable member 116 will apply a force to the fruit 450 in different directions; for example, the domed base portion 124 of the cavity wall 122 will apply a substantially axial force, that is a force along axis X-X, at the lowermost end thereof.

The use of the five ribs 132 results in five expanding lobes 460 being formed by the cavity wall 122 to enable the fruit 450 to be compressed in a controlled manner. By this is meant that an approximately even force will be applied around the periphery of the fruit 450, irrespective of variations in the structural integrity of the skin or internal parts of the fruit 450. The ribs 132 thus prevent one part of the cavity wall 122 from expanding significantly more than the other parts, which would lead to an uncontrolled collapse.

As an example, a citrus fruit such as an orange is a non-uniform sphere. A part of the skin of the orange may be thinner, softer or weaker than the remainder of the skin. If the ribs 132 were not present, then the applied hydraulic force would be focussed at the weakest point on the surface of the orange and the initial collapse would be at this point. The result will be a non-uniform collapse centred on the weak spot of the orange. As a result, other regions of the orange may not experience sufficient force to extract the juice contained therein, reducing the yield of juice obtainable from the fruit.

By use of the juice extractor 100, a significantly greater amount of juice can be extracted from the fruit. In the case of an orange, an optimum yield of 40 - 45% by weight can be achieved. Further juice extraction is not desirable, because peel oils in the skin of the fruit may be extracted and become mixed with the juice, giving a bitter taste to the extracted juice. In this respect, a further advantage of the described arrangement is that the evenly-applied hydraulic pressure results in a controlled collapse which is less likely to break the skin of the fruit. Therefore, extraction of peel oils from the skin of the fruit is less of a problem.

The applied hydraulic pressure from the fluid in the fluid cavity 136 forces the juice from the fruit 450. Since the comestible cavity 134 is sealed by the movable member 116 and the closure member 108, the only outlet for juice from the cavity is through the apertures 418 in the sleeve 414 of the cutter 404. Consequently, juice pushes the plunger 420 upwardly and then flows up into the juice reservoir 402. From the juice reservoir 402, the juice flows by gravity along the dispensing conduit 412 to the spout 18. The juice then flows out of the spout 18 into the receptacle provided by the user.

Once the juice within the fruit 450 has been extracted, the pressure within the interior of the fruit 450, and within the comestible cavity 134, will reduce. This causes the plunger 420 to move downwardly under the action of the spring 422. This action pushes the core of the fruit 450 (which is forced into the interior of the sleeve 414 when the cutter 404 moves from the retracted position into the extended position) out of the interior of the sleeve 414 and back inside the husk of the fruit 450. This is convenient for the user to dispose of because there is only a single item to throw away.

Once a juicing operation is completed, the user may wish to commence another juicing operation immediately. In order to commence a further juicing operation, the husk of the juiced fruit 450 must first be removed and another comestible (for example, another fruit) placed in the juicing unit 100 of the juice extractor 10. In order to allow convenient access to the husk, the motor 226 and gear arrangement 228 of the reversible valve 208 is driven to move the valve body 224 into the second mode so that the hydraulic circuit 350 is in the configuration shown in Figure 17. The pumps 202, 204 are then operated in order to pump fluid in the second direction to remove fluid from the fluid cavity 136. Fluid is pumped from the fluid cavity 136 back to the flexible reservoir 302 which will then inflate as the fluid is returned thereto.

As the pressure in the fluid cavity 136 and the amount of fluid in the fluid cavity 136 are reduced, the lobes 460 formed in the cylindrical upper portion 123 of the cavity wall 122 by the applied hydraulic force will gradually contract and the comestible cavity 134 will concomitantly expand. After a short period, sufficient fluid will have been removed from the fluid cavity 136 so that the movable member 116 is returned back to its natural shape as shown in Figure 2.

The chamber 102 is then rotated by the motor and bearing arrangement 114 relative to the closure member 108 to disengage the lugs 110 from the grooves 112 to release the closure member 108 from the chamber 102. The access door 20 can then be opened by the user by lifting the access door 20 so that the access door 20 pivots upwardly about the hinge 22 to reveal the comestible cavity 134, as shown in Figures 25 and 26.

The comestible cavity 134 has by now expanded sufficiently that the user can manually remove the husk of the fruit 450 from the comestible cavity 134. As a variation, it could be arranged for a small amount of hydraulic pressure to be retained in the fluid cavity 134 so that the domed base portion 124 of the cavity wall 122 lifts the husk of the fruit upwardly such that the husk is easily graspable by a user. Another fruit can then be inserted into the comestible cavity 134 for juicing, as described above.

As mentioned above, parts of the juice extractor 10 may be removed therefrom for cleaning. With the access door 20 open, the user can grasp the removable liner 138 by the seating ring 144 located at the upper end thereof. The seating ring 144 is moulded from thicker polyurethane than the remainder of the removable liner 138 and helps to maintain the shape of the removable liner 138 and provide a graspable surface for the user. The user can then pull the removable liner 138 away from the inner surface of the cavity wall 122. Any juice or comestible remaining in the chamber 102 will be removed with the removable liner 138 and so the movable member 116 will not require cleaning.

The removable liner 138 can be cleaned either by manual cleaning in clean water or by cleaning in a dishwasher. If the removable liner 138 becomes damaged, torn or cracked, it can simply be thrown away and replaced. Therefore, the removable liner 138 forms a sacrificial protective layer which protects the movable member 116 from dirt, wear and tear. Consequently, there should be no need to replace the movable member 116 during the lifetime of the juice extractor 10.

As previously mentioned, the juice reservoir 402 is also removable for cleaning after a juicing operation.

It will be understood that the invention is not to be limited to the precise details described above. Other variations and modifications will be apparent to the skilled reader.

A variety of comestibles may be juiced. The term "comestible" is to be interpreted broadly and is intended to cover all juice-bearing foodstuffs; for example, fruits, vegetables, meats, fungi, plants and herbs.

There need not be five expandable lobes formed in the cavity wall 122, nor need there be five ribs 132. In order to achieve a controlled compression of the comestible, at least three lobes are desired. However, any number above three may be provided.

Further, the lobes (and ribs) need not be equi-spaced about the axis of the chamber. The spacing between the lobes (and the ribs) may be varied as appropriate; for example, to achieve a specific type of controlled compression.

The cavity wall may also include an imprinting arrangement. A sign (for example, a logo, lettering or an image) may be formed in relief on the cavity wall, i.e. the sign may take the form of a raised projection in the cavity wall. In this manner, when a comestible is juiced, the sign will be formed on the outer surface of the comestible as hydraulic pressure is applied to the cavity wall. Alternatively, the imprinting arrangement may take the form of an item insertable into the cavity which is forced against the outer surface of the fruit during a juicing operation, leaving an imprint thereon.

The biasing member may take a form other than a coil spring. Whilst a resilient member (such as a spring or other suitable part under tension) is preferred, other biasing members may be used. For example, a solenoid could be used to urge the base of the cavity wall. Alternatively, a second hydraulic circuit or arrangement could be used.

Further, the biasing member need not be located at the base of the chamber and need not apply an upward force. The biasing member could be located anywhere within the chamber or the cavity, and could apply a force at any point in the chamber or cavity where it is required. However, it is desired that the biasing member applies a force in a substantially inward direction relative to the cavity such that the biasing member assists the applied hydraulic force in moving the cavity wall.

The closure member need not form part of the access door. A separate closure member may be provided, which may be released by a user once the access door has been opened. Alternatively, the closure member may be formed in the outer casing of the juice extractor.

Whilst it is desired that the closure member and chamber secure to one another by relative rotation, it is merely preferred that the chamber rotates relative to the closure member. Alternatively, the closure member may rotate relative to the chamber, either manually or by mechanical or electrical means.

Other securing mechanisms may be used; for example, bolts, pins, cams or locks which are engaged by relative rotation between the closure member and the chamber. Additionally, if lugs and grooves are to be used in a bayonet type fitting, then the positions of these could be reversed, i.e. the lugs may be located on the chamber and the grooves in the closure member. Additionally, the closure member need not be at the upper end of the chamber and may be located at the base or side of the chamber.

Alternative mechanisms for preventing the cutter from damaging the cavity wall may be used. There need not be a cylindrical plate located, in use, below the cutter. Instead, a detector may be used to detect the position of the cutter relative to the cavity wall. This could be achieved by any one of the following examples: a photodetector, a torque detector which detects an increased torque when the cavity wall is contacted, a fluid meter which monitors how much fluid has been introduced into the fluid cavity (and, hence, can determine the position of the cavity wall therefrom), and an arrangement which limits the amount of fluid available in the reservoir.

## Claims

1. Apparatus for extracting juice from a comestible, the apparatus comprising a cavity for receiving a comestible, the cavity having a cavity wall extending about an axis and movable in response to an applied hydraulic force to form a plurality of lobes spaced about the axis for applying a compressive force to the comestible.

2. Apparatus as claimed in claim 1, wherein the lobes formed by the cavity wall are evenly spaced about the axis.

3. Apparatus as claimed in claim 1 or claim 2, wherein the cavity wall is arranged to form at least three expandable lobes.

4. Apparatus as claimed in claim 1 or claim 2, wherein the cavity wall is arranged to form at least five expandable lobes.

5. Apparatus as claimed in any of the preceding claims, wherein the cavity wall comprises restraining members located thereabout, each of the plurality of lobes being formed between adjacent restraining members.

6. Apparatus as claimed in claim 5, wherein each restraining member comprises a rib.

7. Apparatus as claimed in claim 6, wherein the ribs are elongate and extend parallel to the axis of the cavity.

8. Apparatus as claimed in any of claims 5 to 7, wherein an outer wall is provided adjacent the cavity wall, the restraining members extending between the cavity wall and the outer wall.

9. Apparatus as claimed in claim 8, wherein the cavity wall and the outer wall are connected together.

10. Apparatus as claimed in claim 9, wherein the cavity wall is folded to form the outer wall.

11. Apparatus as claimed in any of the preceding claims, comprising a fluid cavity for containing fluid for applying the hydraulic force to the cavity wall, at least a part of the fluid cavity being defined by the cavity wall.

12. Apparatus as claimed in claim 11, comprising a chamber having a chamber wall extending about the cavity wall, the chamber wall and the cavity wall delimiting the fluid cavity.

13. Apparatus as claimed in claim 8 and claim 12, wherein the outer wall is attached to the chamber wall.

14. Apparatus as claimed in claim 13, wherein at least a part of the fluid cavity is formed between the cavity wall and the outer wall.

15. Apparatus as claimed in any of the preceding claims, wherein the cavity wall is formed from plastics material, preferably polyurethane.

16. Apparatus as claimed in any of the preceding claims, wherein at least a part of the cavity is substantially cylindrical.

17. Apparatus as claimed in any of the preceding claims in the form of a domestic juice extractor.

18. A method of extracting juice from a comestible, comprising the steps of:
locating a comestible within a cavity having a moveable cavity wall extending about an axis; and
applying a hydraulic force to cause the cavity wall to form a plurality of lobes spaced about the axis for applying a compressive force to the comestible.
